# EUROPEAN PATENT APPLICATION

(11) **EP 4 697 663 A1**
(43) Date of publication of application: **18.02.2026**
(21) Application number: 24802523.1
(22) Date of filing: 12.01.2024
(51) Int. Cl.: H04L 41/04

(54) **MANAGEMENT METHOD AND MANAGEMENT APPARATUS FOR NETWORK MANAGEMENT INTENT, AND SYSTEM**

(30) Priority: 11.05.2023 CN 202310532312
(71) Applicant: Huawei Technologies Co., Ltd., Shenzhen, Guangdong 518129 (CN)
(72) Inventor: FENG, Xiaohan, Shenzhen, Guangdong 518129 (CN); LI, Yexing, Shenzhen, Guangdong 518129 (CN); XU, Ruiyue, Shenzhen, Guangdong 518129 (CN); YU, Yijun, Shenzhen, Guangdong 518129 (CN)
(74) Representative: Gill Jennings & Every LLP
(86) International application number: PCT/CN2024/072016
(87) International publication number: WO 2024/230235

(57) **Abstract**

This application provides a method and an apparatus for managing a network management intent, and a system. The method includes: receiving a trigger condition associated with the network management intent, where the trigger condition is a condition for triggering execution of actions, and the actions include at least one network management action used for implementing at least one target in the network management intent. A producer entity can start to execute the actions in response to determining that the trigger condition is satisfied, instead of relying on signaling between a consumer entity and the producer entity to trigger the execution of the actions, so that management performance for the network management intent can be improved.

## Description

This application claims priority to Chinese Patent Application No. 202310532312.6, filed with the China National Intellectual Property Administration on May 11, 2023 and entitled "METHOD AND APPARATUS FOR MANAGING NETWORK MANAGEMENT INTENT, AND SYSTEM", which is incorporated herein by reference in its entirety.

### TECHNICAL FIELD

This application relates to the field of communication technologies, and more specifically, to a method and an apparatus for managing a network management intent, and a system.

### BACKGROUND

With development of network resource management, a network management service consumer entity may not directly manage a network resource. The network management service consumer entity may send a message to a network management service producer entity, so that the network management service producer entity executes a network management intent, to achieve an expectation target of a specified performance metric of a network equipment in a specific range. Generally, this manner of managing the network management intent requires frequent signaling exchange between the consumer entity and the producer entity.

Therefore, how to improve management performance for the network management intent is a technical problem to be urgently resolved.

### SUMMARY

This application provides a method and an apparatus for managing a network management intent, and a system, to improve management performance for the network management intent.

According to a first aspect, a method for managing a network management intent is provided. The method may be performed by a network management service producer entity or a chip in the network management service producer entity. The method includes: receiving a trigger condition associated with the network management intent, where the trigger condition is a condition for triggering execution of actions, and the actions include at least one network management action used for implementing at least one target in the network management intent; and starting to execute the actions in response to determining that the trigger condition is satisfied.

Based on this technical solution, the producer entity can start to execute the actions in response to determining that the trigger condition is satisfied, instead of relying on signaling between a consumer entity and the producer entity to trigger the execution of the actions, so that management performance for the network management intent can be improved.

With reference to the first aspect, in some implementations of the first aspect, the trigger condition is a constraint condition that is of a performance metric and that is related to a managed entity of the network management intent.

Based on this technical solution, a plurality of types of trigger conditions may be configured for the network management intent, to implement flexible management of the network management intent.

With reference to the first aspect, in some implementations of the first aspect, receiving the trigger condition associated with the network management intent includes: receiving a first request message, where the first request message is used for requesting to create the network management intent, and the first request message includes the network management intent and the trigger condition, or the first request message includes the network management intent, and the network management intent includes the trigger condition; or receiving a second request message, where the second request message is used for requesting to modify the network management intent, and the second request message includes an identifier of the network management intent and the trigger condition.

With reference to the first aspect, in some implementations of the first aspect, the method further includes: receiving a suspension condition associated with the network management intent, where the suspension condition is a condition for suspending the actions; and suspending the execution of the actions in response to determining that the suspension condition is satisfied.

Based on this technical solution, the producer entity can suspend the execution of the actions in response to determining that the suspension condition is satisfied, instead of relying on the signaling between the consumer entity and the producer entity to suspend the execution of the actions, so that consumption of transmission resources can be reduced.

With reference to the first aspect, in some implementations of the first aspect, the suspension condition is a constraint condition that is of a performance metric and that is related to the managed entity of the network management intent.

Based on this technical solution, a plurality of types of suspension conditions may be configured for the network management intent, to implement the flexible management of the network management intent.

With reference to the first aspect, in some implementations of the first aspect, receiving the suspension condition associated with the network management intent includes: receiving a third request message, where the third request message is used for requesting to create the network management intent, and the third request message includes the network management intent and the suspension condition; or receiving a fourth request message, where the fourth request message is used for requesting to modify the network management intent, and the fourth request message includes the identifier of the network management intent and the suspension condition.

With reference to the first aspect, in some implementations of the first aspect, after suspending the execution of the actions, the method further includes: resuming the execution of the actions in response to determining that the trigger condition is satisfied.

Based on this technical solution, the producer entity can execute and suspend the execution of the actions for a plurality of times. This process does not rely on the signaling between the consumer entity and the producer entity. Especially in a scenario with frequent requirements on the network management intent, the consumption of the transmission resources can be reduced.

With reference to the first aspect, in some implementations of the first aspect, after starting to execute the actions in response to determining that the trigger condition is satisfied, the method further includes: sending first report information, where the first report information indicates that the actions enter an executed state.

Based on this technical solution, the producer entity may report, to the consumer entity, that the actions enter the executed state, so that the consumer entity can learn of a running state of the current network management intent.

With reference to the first aspect, in some implementations of the first aspect, after suspending the execution of the actions in response to determining that the suspension condition is satisfied, the method further includes: sending second report information, where the second report information indicates that the actions enter a suspended state.

Based on this technical solution, the producer entity may report, to the consumer entity, that the actions enter the suspended state, so that the consumer entity can learn of the running state of the current network management intent.

With reference to the first aspect, in some implementations of the first aspect, the at least one target is all targets in all expectations in the network management intent; the at least one target is all targets in one expectation in the network management intent; or the at least one target is one target in one expectation in the network management intent.

Based on this technical solution, when the network management intent includes at least one intent expectation, and one intent expectation includes at least one expectation target, the trigger condition may be associated with the network management intent, the intent expectation, or the expectation target, so that different intent expectations or expectation targets support different trigger conditions for configuration, the flexible management of the network management intent can be implemented.

According to a second aspect, a method for managing a network management intent is provided. The method may be performed by a network management service consumer entity or a chip in the network management service consumer entity. The method includes: generating a trigger condition associated with the network management intent, where the trigger condition is a condition for triggering execution of actions, and the actions include at least one network management action used for implementing at least one target in the network management intent; and sending the trigger condition.

For beneficial technical effects of various implementations of the second aspect, refer to the descriptions of the related implementations of the first aspect. Details are not described again.

With reference to the second aspect, in some implementations of the second aspect, the trigger condition is a constraint condition that is of a performance metric and that is related to a managed entity of the network management intent, or the trigger condition is a periodic constraint condition.

With reference to the second aspect, in some implementations of the second aspect, sending the trigger condition includes: sending a first request message, where the first request message is used for requesting to create the network management intent, and the first request message includes the network management intent and the trigger condition, or the first request message includes the network management intent, and the network management intent includes the trigger condition; or sending a second request message, where the second request message is used for requesting to modify the network management intent, and the second request message includes an identifier of the network management intent and the trigger condition.

With reference to the second aspect, in some implementations of the second aspect, the method further includes: sending a suspension condition of the network management intent, where the suspension condition is a condition for suspending the actions.

With reference to the second aspect, in some implementations of the second aspect, the suspension condition is a constraint condition that is of a performance metric and that is related to the managed entity of the network management intent.

With reference to the second aspect, in some implementations of the second aspect, sending the suspension condition includes: sending a third request message, where the third request message is used for requesting to create the network management intent, and the third request message includes the network management intent and the suspension condition; or sending a fourth request message, where the fourth request message is used for requesting to modify the network management intent, and the fourth request message includes the identifier of the network management intent and the suspension condition.

With reference to the second aspect, in some implementations of the second aspect, the method further includes: receiving first report information, where the first report information indicates that the actions enter an executed state.

With reference to the second aspect, in some implementations of the second aspect, the method further includes: receiving second report information, where the second report information indicates that the actions enter a suspended state.

With reference to the second aspect, in some implementations of the second aspect, the at least one target is all targets in all expectations in the network management intent; the at least one target is all targets in one expectation in the network management intent; or the at least one target is one target in one expectation in the network management intent.

According to a third aspect, a method may be performed by a network management service consumer entity or a chip in the network management service consumer entity, or a network management service producer entity or a chip in the network management service producer entity. The method includes: sending a trigger condition associated with a network management intent, and receiving the trigger condition associated with the network management intent, where the trigger condition is a condition for triggering execution of actions, and the actions include at least one network management action used for implementing at least one target in the network management intent; and starting to execute the actions in response to determining that the trigger condition is satisfied.

For beneficial technical effects of various implementations of the third aspect, refer to the descriptions of the related implementations of the first aspect. Details are not described again.

With reference to the third aspect, in some implementations of the third aspect, the trigger condition is a constraint condition that is of a performance metric and that is related to a managed entity of the network management intent.

With reference to the third aspect, in some implementations of the third aspect, sending and receiving the trigger condition associated with the network management intent include: sending and receiving a first request message, where the first request message is used for requesting to create the network management intent, and the first request message includes the network management intent and the trigger condition, or the first request message includes the network management intent, and the network management intent includes the trigger condition; or sending and receiving a second request message, where the second request message is used for requesting to modify the network management intent, and the second request message includes an identifier of the network management intent and the trigger condition.

With reference to the third aspect, in some implementations of the third aspect, the method further includes: sending and receiving a suspension condition of the network management intent, where the suspension condition is a condition for suspending the actions; and suspending the execution of the actions in response to determining that the suspension condition is satisfied.

With reference to the third aspect, in some implementations of the third aspect, after suspending the execution of the actions, the method further includes: resuming the execution of the actions in response to determining that the trigger condition is satisfied.

With reference to the third aspect, in some implementations of the third aspect, after starting to execute the actions in response to determining that the trigger condition is satisfied, the method further includes: sending and receiving first report information, where the first report information indicates that the actions start to be executed.

With reference to the third aspect, in some implementations of the third aspect, after suspending the execution of the actions in response to determining that the suspension condition is satisfied, the method further includes: sending and receiving second report information, where the second report information indicates that the execution of the actions is suspended.

With reference to the third aspect, in some implementations of the third aspect, the at least one target is all targets in all expectations in the network management intent; the at least one target is all targets in one expectation in the network management intent; or the at least one target is one target in one expectation in the network management intent.

According to a fourth aspect, an apparatus for managing a network management intent is provided. The apparatus includes a transceiver unit and a processing unit. The transceiver unit is configured to receive a trigger condition associated with the network management intent, where the trigger condition is a condition for triggering execution of actions, and the actions include at least one network management action used for implementing at least one target in the network management intent; and the processing unit is configured to start to execute the actions in response to determining that the trigger condition is satisfied.

For various implementations of the fourth aspect and beneficial technical effects of the implementations, refer to the descriptions of the related implementations of the first aspect. Details are not described again.

According to a fifth aspect, an apparatus for managing a network management intent is provided. The apparatus includes a transceiver unit and a processing unit. The processing unit is configured to generate a trigger condition associated with the network management intent, where the trigger condition is a condition for triggering execution of actions, and the actions include at least one network management action used for implementing at least one target in the network management intent; and the transceiver unit is configured to send the trigger condition.

For various implementations of the fifth aspect and beneficial technical effects of the implementations, refer to the descriptions of the related implementations of the first aspect. Details are not described again.

According to a sixth aspect, a communication apparatus is provided. The communication apparatus has a function of implementing any one of the first aspect or the possible implementations of the first aspect, any one of the second aspect or the possible implementations of the second aspect, or any one of the third aspect or the possible implementations of the third aspect. The function may be implemented by hardware, or may be implemented by executing corresponding software by hardware. The hardware or the software includes one or more units that correspond to the foregoing function.

According to a seventh aspect, a communication apparatus is provided, and includes a processor and a memory. Optionally, the communication apparatus may further include a transceiver machine. The memory is configured to store a computer program, and the processor is configured to: invoke and run the computer program stored in the memory, and control the transceiver machine to receive and send a signal, to enable the communication apparatus to perform the method according to any one of the first aspect or the possible implementations of the first aspect.

For example, the communication apparatus is a network management service producer entity.

According to an eighth aspect, a communication apparatus is provided, and includes a processor and a memory. Optionally, the communication apparatus may further include a transceiver machine. The memory is configured to store a computer program, and the processor is configured to: invoke and run the computer program stored in the memory, and control the transceiver machine to receive and send a signal, to enable the communication apparatus to perform the method according to any one of the second aspect or the possible implementations of the second aspect.

For example, the communication apparatus is a network management service consumer entity.

According to a ninth aspect, a communication apparatus is provided, and includes a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, so that the method according to any one of the first aspect or the possible implementations of the first aspect is performed. The communication apparatus may be a chip used in a network management service producer network element.

According to a tenth aspect, a communication apparatus is provided, and includes a processor and a communication interface. The communication interface is configured to: receive data and/or information, and transmit the received data and/or information to the processor. The processor processes the data and/or information. In addition, the communication interface is further configured to output data and/or information that are/is obtained through processing by the processor, so that the method according to any one of the second aspect or the possible implementations of the second aspect is performed. The communication apparatus may be a chip used in a network management service consumer network element.

According to an eleventh aspect, a computer-readable storage medium is provided. The computer-readable storage medium stores computer instructions, and when the computer instructions are run on a computer, the method according to any one of the first aspect or the possible implementations of the first aspect is performed.

According to a twelfth aspect, a computer-readable storage medium is provided. The computer-readable storage medium stores computer instructions, and when the computer instructions are run on a computer, the method according to any one of the second aspect or the possible implementations of the second aspect is performed.

According to a thirteenth aspect, a computer program product is provided. The computer program product includes computer program code, and when the computer program code is run on a computer, the method according to any one of the first aspect or the possible implementations of the first aspect is performed.

According to a fourteenth aspect, a computer program product is provided. The computer program product includes computer program code, and when the computer program code is run on a computer, the method according to any one of the second aspect or the possible implementations of the second aspect is performed.

According to a fifteenth aspect, a wireless communication system is provided, and includes the communication apparatus according to the fourth aspect and/or the communication apparatus according to the fifth aspect.

According to a sixteenth aspect, a wireless communication system is provided, and includes the communication apparatus according to any one or more of the fourth aspect to the fifteenth aspect, or the communication apparatus according to any possible implementation of any one of the aspects.

### BRIEF DESCRIPTION OF DRAWINGS

FIG. 1 is a diagram of a structure of an intent IOC;
FIG. 2 is a diagram of a structure of a communication system to which an embodiment of this application is applicable;
FIG. 3 is a schematic flowchart of a method for managing a network management intent according to an embodiment of this application;
FIG. 4 is another schematic flowchart of a method for managing a network management intent according to an embodiment of this application; and
FIG. 5 to FIG. 7 are diagrams of possible communication apparatuses according to embodiments of this application.

### DESCRIPTION OF EMBODIMENTS

The following describes technical solutions of this application with reference to accompanying drawings.

The technical solutions of this application may be applied to various network function virtualization (network function virtualization, NFV) systems. In the systems, current service technical solutions, network construction schemes, and network operations and maintenance methods of an operator may be described as modes and policies in a standard formal language, and the technical solutions and the construction schemes are implemented based on the modes and the policies. For example, the technical solutions of this application may be applied to one or more of the following systems: a wireless intent driven network (wireless intent driven network, wIDN) system, an experiential networked intelligence (experiential networked intelligence, ENI) system, an intent driven management service (intent driven management service, IDMS) system, an open network automation platform (open network automation platform, ONAP) system, or the like.

For clarity, the following explains some terms in embodiments of this application.

### 1. Network management, network management service, network management service producer entity, and network management service consumer entity

### 1.1 Network management

The network management refers to managing a network resource, including but not limited to monitoring, controlling, and recording performance and usage of the network resource, and delivering management actions to the network resource (such as a network equipment) based on a detected network status, to enable the network to run effectively. For example, the network management may be monitoring, testing, configuring, analyzing, evaluating, and controlling the network resource. The network management may alternatively be that when a fault occurs in the network, the fault can be reported and processed in time, a network system can be coordinated and maintained to run efficiently, and the like. The network resource is an object to which the network management is applied, and may also be referred to as a network object or a managed entity. For example, the network resource may be a base station device, a router, a switch, a core network device, or the like. This is not particularly limited in this embodiment of this application. For ease of description, the managed entity is used as an example for description in embodiments of this application, but may be replaced with another object to which the network management is applied.

### 1.2 Network management service

The network management service refers to a service that provides a network management function. A producer entity of the service usually provides the network management function for a consumer entity of the service through a network interface (for example, a service-based interface, service-based interface).

### 1.3 Network management service producer entity

An entity that provides the network management service is referred to as the network management service producer entity. For example, a capability or a function of the network management service producer entity may be deployed on a network element, and the network element is referred to as a network management service producer network element. Alternatively, a capability or a function of the network management service producer entity may be deployed on another device. This is not limited in embodiments of this application. For ease of description, the network management service producer entity is used as an example for description in embodiments of this application, but may be replaced with another device on which the capability or the function of the network management service producer entity is deployed.

### 1.4 Network management service consumer entity

An entity that invokes the network management is referred to as the network management service consumer entity. For example, a capability or a function of the network management service consumer entity may be deployed on a network element, and the network element is referred to as a network management service consumer network element. Alternatively, a capability or a function of the network management service consumer entity may be deployed on another device. This is not limited in embodiments of this application. For ease of description, the network management service consumer entity is used as an example for description in embodiments of this application, but may be replaced with another device on which the capability or the function of the network management service consumer entity is deployed.

### 2. Network management intent (intent for short)

The network management intent refers to a requirement of the network management service consumer entity for the network management service, and may also be referred to as a network management service requirement. This name is not limited in embodiments of this application. For example, the network management intent may be an intent such as an optical private line service intent or an energy saving intent, for example, an intent (intent) defined in the 3rd generation partnership project (3rd generation partnership project, 3GPP) standard specification 28.312.

In an intent-based interaction scenario of this application, two roles are mainly included: a network management provider entity and the network management service consumer entity. The network management provider entity may also be referred to as a network management provider, an intent provider (intent provider), an intent handler (intent handler), or the like. The network management service consumer entity may also be referred to as a network management service consumer, an intent consumer (intent consumer), an intent owner (intent owner), or the like.

The network management service consumer entity may be an invoker of the network management service, and may perform operations such as creating, modifying, deleting, and querying for a network management intent expression. The network management service consumer entity may be configured in a network management system (network management system, NMS), an element management system (element management system, EMS), or a network equipment (network equipment, NE), and may be a management function, a management functional entity, a management entity, a network equipment, a network element, or the like. This is not limited in this application.

The intent may be applied to the network system, to achieve an expectation target of a specified performance metric of the network equipment in a specific range. The intent may express an expectation for the network system by using a formal specification and description information. The formal specification may be intent-specific syntax or semantics, and the description information may be used for describing a requirement of the intent, a target of the intent, and a constraint for the intent.

The intent may include at least one intent expectation. Each intent expectation may represent a performance requirement of the network management service consumer entity for a specific network object. One intent expectation may include at least one expectation target and an expectation object, and each expectation target may represent a performance requirement of the network management service consumer entity for a specific attribute of the expectation object. For example, the intent expectation may include two expectation targets. One expectation target is that an average downlink throughput is greater than 5 Mbit/s, and the other expectation target is that end-to-end latency is less than 10 milliseconds. If an average downlink throughput of the expectation object is greater than 5 Mbit/s, the expectation target related to the downlink throughput is satisfied. If end-to-end latency of the expectation object is less than 10 milliseconds, the expectation target related to the latency is satisfied. If the two expectation targets in the intent expectation are satisfied, the intent expectation is achieved.

The intent may further include an intent context. The intent context may represent a constraint or a condition of the network management service consumer entity for the intent. For example, the network management service consumer entity may constrain duration of the intent by using the intent context.

The intent may further include an expectation context. The expectation context may represent a constraint or a condition of the network management service consumer entity for the intent expectation. For example, the network management service consumer entity may constrain duration of the intent expectation by using the expectation context.

The intent may further include a target context. The target context may represent a constraint or a condition of the network management service consumer entity for the expectation target. For example, the network management service consumer entity may constrain duration of the expectation target by using the target context.

The intent may further include an object context. The object context may represent a constraint or a condition of the network management service consumer entity for a network object on which the intent acts. For example, the network management service consumer entity may indicate, by using the object context, an area in which the network object on which the intent acts is located.

The intent expectation, the expectation target, and the intent context described above may be used as information elements in an information object class (information object class, IOC) in an intent creation request. The network management service consumer entity may send the information element to the network management service producer entity, to express a requirement for a network management service.

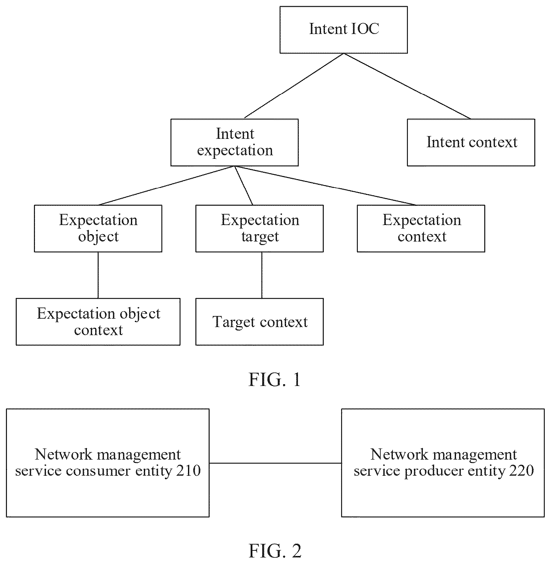

The information element in the intent IOC may express the requirement for the network management service in a specific structure. For example, FIG. 1 is a diagram of a structure of an intent IOC.

Refer to FIG. 1. The intent IOC includes an intent expectation and an intent context. The intent expectation includes an expectation object, an expectation target, and an expectation context. The expectation object includes an expectation object context, and the expectation target includes a target context. It may be understood that an information element of a non-context type (for example, the intent IOC, the intent expectation, the expectation object, or the expectation target) may include an information element of a context type (for example, the intent context, the expectation object context, the target context, or the expectation context). The information element of the context type can be used for constraining the information element of the non-context type.

It may be understood that FIG. 1 schematically describes a relationship between attributes in the intent IOC. Based on a network management service requirement, the intent IOC may further include another attribute. This is not particularly limited in this application. It may be further understood that a quantity of attributes of a same type is not particularly limited in this application. For example, one intent IOC may include one or more parallel intent expectation attributes, and one intent expectation may also include one or more parallel expectation target attributes.

### 3. Network management intent template

The network management intent template refers to sample description information of the network management intent, and may also be referred to as a network management service requirement template. This name is not limited in embodiments of this application. The intent template may be used for specifying syntax and semantics of various attribute expressions described above. For example, the intent template may specify a field type, a value type, and the like that may be used for each attribute in the IOC. For example, the intent template may include intent expectation description information used for specifying how the intent expectation is expressed, and the intent expectation description information may specify a type of an expectation target attribute, for example, latency, a bandwidth, or a maximum quantity of users, that may be included in the intent expectation. The intent expectation description information may further specify a field type of each expectation target. For example, a field type of an expectation target related to the latency is a character string, a field type of an expectation target related to the bandwidth is a character string, and a field type of an expectation target related to the maximum quantity of users is an integer. For another example, the intent template may further include intent context description information that specifies how the intent context and the expectation context are expressed. The intent context description information may be used for specifying a field type of the intent context, and the like. This is not particularly limited in this application.

### 4. Intent expression

In embodiments of this application, the intent expression is an information form for expressing the network management service intent, and may be an instantiation result of the network management intent template. A consumer of the network management intent may instantiate the intent IOC based on the intent template to generate the intent expression, so that the intent expression generated through instantiation can be used for a specific network service. For example, the intent expression may be represented by a list of a set of attributes and key-value pairs (for example, a set of [attribute, value]) of the network management service intent.

For example, the intent expression includes a performance metric information instance, a network object information instance, and a context information instance.

For example, the performance metric information instance may include a value or a value range of a target metric requirement corresponding to performance metric information. For example, a target metric requirement corresponding to a performance metric information template includes a bandwidth parameter, and the performance metric information instance includes that a value of the bandwidth parameter is 20M, or a value range of the bandwidth parameter is 10M to 15M. For example, the target metric requirement corresponding to the performance metric information template includes a latency parameter, and a latency parameter instance includes that a value of the latency parameter is 2s, or a value range of the latency parameter is 1s to 5s.

A target network object indicated by the network object information instance is an instantiation result of a target network object indicated by a network object information template. For example, the target network object indicated by the network object information instance is one of target network objects indicated by the network object information template, in other words, indicates one of a physical entity or a logical entity that implements the network management service. In this case, the network object information instance indicates a specific network object. For example, the network object information template indicates a network service, and the network object information instance indicates an energy saving service.

The context information instance indicates a constraint condition of the network management intent expression. For example, the context information instance includes a constraint parameter of the network management intent expression. For example, the context information instance may include a source, sink information, and the like corresponding to the target network object indicated by the network object instance.

An intent expectation information instance includes the performance metric information instance and the network object information instance.

In embodiments of this application, an "intent" transmitted by using a message is an intent expression.

### 5. Intent instance

The network management intent instance refers to a network management intent processing process locally created by the network management service provider entity based on the received network management intent expression (for example, the performance metric information instance, the network object information instance, or the context information instance).

The network management intent processing process is used for processing the network management intent expression. For example, the network management intent processing process may include an identifier, and the identifier is used for identifying the process; the network management intent processing process may include a computing resource, and the computing resource is used for performing operations such as network management intent translation and database (for example, a semantic knowledge base) query; and the network management intent processing process may include a storage resource, and the storage resource is used for storing the network management intent expression, a result of network management intent translation, and the like.

The network management intent translation is used for converting the network management intent expression into corresponding management actions. The management actions may be instructions that are applied to the physical entity or the logical entity, for example, used for adjusting an antenna tilt angle of a base station or turning on an energy saving switch of a cell.

### 6. Network management actions (actions)

The network management actions are one or more network management actions generated by the network management service producer entity based on the intent expression. The network management service producer entity performs the one or more network management actions to satisfy an intent of the network management service consumer entity. The network management actions may also be referred to as a management operation or an intent operation. The network management actions may be an operation instruction set for the expectation object (for example, the physical entity or the logical entity on which the intent acts and that is in the network system), and includes one or more instructions, for example, used for adjusting an antenna tilt angle of a base station or turning on an energy saving switch of a cell.

The network management service producer entity may generate a plurality of management actions based on the intent expression. In an execution process, the network management service producer entity may select a part of management actions from the plurality of management actions for execution at a time. In other words, the management actions generated by the network management service producer entity based on the translation of the intent expression are an optional operation that can be used for satisfying the intent. The network management service producer entity may select one of the network management actions for execution to satisfy the intent, or may select network management actions at a plurality of times for execution to satisfy the intent.

The foregoing describes the related terms in embodiments of this application. The following describes, with reference to FIG. 1, an application scenario to which embodiments of this application are applicable.

FIG. 2 is a diagram of a structure of a communication system to which an embodiment of this application is applicable. Apparatuses that may be used in the communication system are first described.
1. A network management service consumer entity 210 may be configured to invoke a management service, that is, invoke an intent service to manage a network system. For example, the network management service consumer entity 210 may instantiate an intent template, set an intent IOC, to generate an intent expression, and send the intent expression to a network management service producer network element 220, to implement an expectation for the network system.
   The network management service consumer entity 210 may also be referred to as a network management service consumer network element, a network management service consumer, an intent management service consumer (intent management service consumer), an intent consumer (intent consumer), an intent owner (intent owner), or the like. In a future communication system, the network management service consumer entity may also have another name. This is not particularly limited in this application.
2. A network management service producer entity 220 may be configured to provide the management service. For example, the network management service producer entity 220 may receive the intent expression from the network management service consumer entity 210, and perform, based on the intent expression, procedures of intent translation, intent management, and intent execution and maintenance.

The network management service producer entity 220 may also be referred to as a network management service producer network element, an intent management service provider (intent management service provider), a network management service producer, an intent provider (intent provider), an intent handler (intent handler), or the like. In the future communication system, the network management service producer entity may also have another name. This is not particularly limited in this application.

The foregoing entity may be a network element in a hardware device, a software function running on dedicated hardware, or a virtualization function instantiated on a platform (for example, a cloud platform). It may be understood that the foregoing entity may be implemented by one device, or may be implemented by a plurality of devices together. In addition, the foregoing entity may alternatively be a functional module in a system, for example, a functional module in a network management system (network management system, NMS), a functional module in an equipment management system (equipment management system, EMS), or a functional module in a device, for example, one or more functional modules in a network equipment (network equipment, NE). The network equipment may be a base station or a core network element.

For example, the network management service consumer entity 210 may be deployed in the NMS, and the network management service producer entity 220 may be deployed in different EMSs. The network management service consumer entity 210 and the network management service producer entity 220 may exchange information through an interface between the NMS and the EMS.

For another example, the network management service consumer entity 210 may be deployed in the EMS, and the network management service producer entity 220 may be deployed in different NEs. The network management service consumer entity 210 and the network management service producer entity 220 may exchange information through the interface between the NMS and the EMS.

The solutions of this application may be further applied to another system including a corresponding entity. This is not limited in this application, and is not specifically limited in embodiments of this application.

For ease of description, the network management service consumer entity is referred to as a consumer entity for short, and the network management service producer entity is referred to as a producer entity for short.

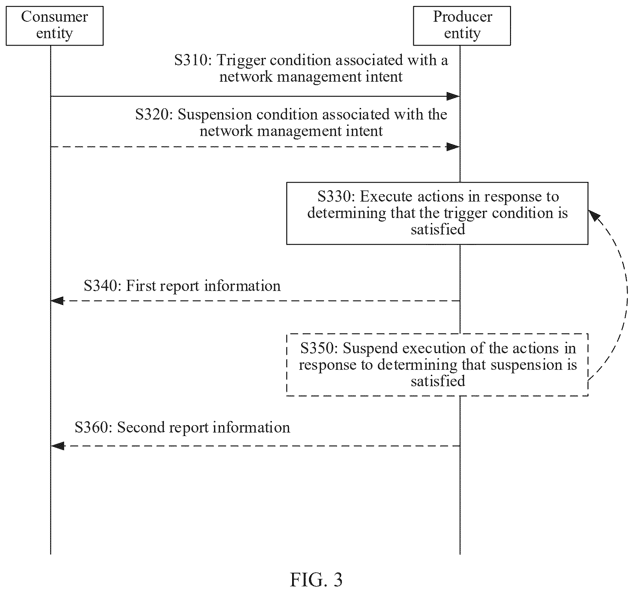

FIG. 3 is a schematic flowchart of a method for managing a network management intent according to an embodiment of this application.

S310: A consumer entity sends a trigger condition associated with the network management intent to a producer entity.

Correspondingly, the producer entity receives the trigger condition from the consumer entity.

The trigger condition is a condition for triggering execution of actions, and the actions include at least one network management action used for implementing at least one target in the network management intent. In this way, the producer entity can start to execute (or resume the execution of) the actions in response to determining that the trigger condition is satisfied, instead of relying on signaling between the consumer entity and the producer entity to trigger the execution of the actions. Especially in a scenario with frequent requirements on the network management intent, consumption of transmission resources can be reduced.

The trigger condition may include a plurality of types of constraint conditions used for triggering the execution of the actions. For example, the trigger condition may be a constraint condition that is of a performance metric and that is related to a managed entity of the network management intent. For example, for a network management intent of an energy saving type, a constrained performance metric may be an energy saving-related performance metric (for example, a network capacity metric like physical resource block utilization or an activity factor). When the performance metric is greater than or equal to a specific threshold, the producer entity determines that the trigger condition is satisfied, and executes energy saving-related actions (for example, management actions such as disabling a power amplifier of a radio frequency module, and carrier shutdown) in response to that the trigger condition is satisfied. For another example, the trigger condition is a periodic constraint condition. For example, the trigger condition indicates a periodicity in which the producer entity executes the actions. For example, the trigger condition indicates the producer entity to execute the energy saving-related actions at 10:00 p.m. every day. For another example, the trigger condition may include the constraint condition that is of the performance metric and that is related to the managed entity of the network management intent and the periodic constraint condition. When both the constraint condition of the performance metric and the periodic constraint condition are satisfied, the producer entity executes the actions. For example, during a period from 10:00 p.m. every day to 9:00 a.m. the following day, if the performance metric is greater than or equal to a specific threshold, the producer entity determines that the trigger condition is satisfied, and executes the actions in response to that the trigger condition is satisfied. This is not particularly limited in this application.

It may be understood that the name "trigger condition" is merely an example rather than a limitation. For example, the name "trigger condition" is also referred to as an "activation condition", a "start condition", a "launch condition", or the like.

The consumer entity may send the trigger condition to the producer entity in a plurality of manners. For example, the consumer entity may include the trigger condition in a first request message or a second request message. The first request message is used for requesting to create the network management intent, and the second request message is used for modifying the network management intent. Alternatively, the consumer entity may include the trigger condition in another message used for intent management. Alternatively, the consumer entity may send the trigger condition as separate information to the producer entity, and the consumer entity may express a requirement on the managed entity by using the trigger condition. For example, when the network management intent in the managed entity is suspended, an intent conflict occurs, an expectation target cannot be achieved for long time, or the like, the consumer entity may send the trigger condition, so that the producer entity can execute the actions (for example, start to execute or resume the execution of the actions) in response to determining that the trigger condition is satisfied.

Optionally, the first request message is an intent creation request message. The second request message is an intent modification request message.

When the consumer entity includes the trigger condition in the first request message (for example, the intent creation request message), the first request message may include the network management intent, and the network management intent may be represented as an instantiated intent IOC (as shown in FIG. 1). In this case, in a possible implementation, the first request message includes the intent IOC and the trigger condition. In this case, the trigger condition may be associated with the network management intent, and actions triggered by the trigger condition are used for implementing all targets in all expectations in the network management intent. In another possible implementation, the first request message includes an intent IOC, and the intent IOC includes the trigger condition.

For example, the intent IOC includes an intent expectation and an intent context (context), and the intent context includes the trigger condition. In this case, actions triggered by the trigger condition may be used for implementing all targets in all expectations in the network management intent.

For another example, the intent IOC includes an intent expectation, the intent expectation includes an expectation context, and the expectation context includes the trigger condition. In this case, actions triggered by the trigger condition may be used for implementing all targets in the intent expectation.

For another example, the intent IOC includes an intent expectation, the intent expectation includes an expectation target, the expectation target includes a target context, and the target context includes the trigger condition. In this case, actions triggered by the trigger condition may be used for implementing the expectation target.

When the consumer entity includes the trigger condition in the second request message (for example, the intent modification request message), the second request message may include an identifier of the network management intent and the trigger condition, and actions triggered by the trigger condition are used for implementing all targets in all expectations in the network management intent. Alternatively, the second request message may include an intent expectation or an expectation target (or an identifier of the intent expectation or the expectation target) and the trigger condition, and actions triggered by the trigger condition are used for implementing the intent expectation or the expectation target. It may be understood that, if the second request message carries a modified intent IOC to implement a modification function, the trigger condition may alternatively be included in the intent IOC. Details are not described herein.

It may be understood that the intent IOC may include a plurality of trigger conditions, the plurality of trigger conditions may be associated with different intent expectations or expectation targets, and trigger conditions associated with the different intent expectations or expectation targets may be the same or may be different. This is not particularly limited in this application.

It may be further understood that the trigger condition may be expressed based on a context template of the network management intent. For example, when the trigger condition is the constraint condition that is of the performance metric and that is related to the managed entity of the network management intent, the trigger condition may include information such as a type of the performance metric and a range of the performance metric, so that the producer entity may obtain a performance metric value of the managed entity based on the type of the performance metric, and determine, depending on whether the performance metric value is within the range of the performance metric, whether the at least one target in the network management intent is achieved.

The producer entity starts to execute or resumes the execution of the actions in response to determining that the trigger condition is satisfied. In this case, the actions enter an executed state, and the network management intent is in an active state. That the intent is in the active state may indicate that the producer entity configures the managed entity based on an objective of satisfying the intent expectation or the expectation target. For example, the producer entity may determine management actions based on the intent expectation or the expectation target, and deliver the management actions to the managed entity. The managed entity executes the management actions to satisfy the intent expectation or the expectation target. For example, the producer entity receives an energy saving intent, where an expectation target of the intent is to reduce average energy consumption by 30%. When the energy saving intent is activated, the producer entity determines, based on the expectation target of the intent, the managed entity to disable the power amplifier of the radio frequency module, and sends an instruction "disable the power amplifier of the radio frequency module" to the managed entity. The managed entity disables the power amplifier of the radio frequency module according to the instruction, to satisfy the expectation target that is of the intent and that is of reducing the average energy consumption by 30%.

The foregoing describes the trigger condition provided in this embodiment of this application. Optionally, in this application, the consumer entity may further send a suspension condition to the producer entity by performing the following step S320.

Optionally, in S320, the consumer entity sends the suspension condition associated with the network management intent to the producer entity.

Correspondingly, the producer entity receives the suspension condition from the consumer entity.

The suspension condition is a condition for suspending the actions. Therefore, the producer entity can suspend the actions in response to determining that the suspension condition is satisfied, without a need of relying on the signaling between the consumer entity and the producer entity to trigger the suspension of the actions, so that the consumption of the transmission resources can be reduced.

The suspension condition may include a plurality of types of constraint conditions used for triggering the suspension of the actions. A form of the suspension condition may be similar to that of the trigger condition. For example, the suspension condition may be a constraint condition that is of a performance metric and that is related to the managed entity of the network management intent. For example, for a network management intent of an energy saving type, a constrained performance metric may be an energy saving-related performance metric (for example, a network capacity metric like physical resource block utilization or an activity factor). When the performance metric is less than or equal to a specific threshold, the producer entity determines that the suspension condition is satisfied, and suspends the energy saving-related actions in response to that the suspension condition is satisfied. For another example, the suspension condition is a periodic constraint condition. For example, the suspension condition indicates a periodicity in which the producer entity executes the actions. For example, the suspension condition indicates the producer entity to suspend the energy saving-related actions at 9:00 a.m. every day. For another example, the suspension condition may include the constraint condition that is of the performance metric and that is related to the managed entity of the network management intent and the periodic constraint condition. When both the constraint condition of the performance metric and the periodic constraint condition are satisfied, the producer entity suspends the actions. For example, during a period from 9:00 a.m. to 10:00 p.m. every day, if the performance metric is less than or equal to a specific threshold, the producer entity determines that the suspension condition is satisfied, and suspends the actions in response to determining that the suspension condition is satisfied. This is not particularly limited in this application.

It may be understood that the name "suspension condition" is merely an example rather than a limitation. For example, the name "suspension condition" may also be referred to as a "deactivation condition", a "termination condition", a "pending condition", or the like.

The consumer entity may also send the suspension condition to the producer entity in a plurality of manners. It may be understood that a manner in which the consumer entity sends the suspension condition may be similar to a manner in which the consumer entity sends the trigger condition. For example, the consumer entity may include the suspension condition in a third request message (for example, an intent creation request message) or a fourth request message (an intent modification request message). Alternatively, the consumer entity may include the suspension condition in another message used for intent management. Alternatively, the consumer entity may send the suspension condition as separate information to the producer entity. It may be understood that the suspension condition may alternatively be included in an intent IOC. A manner of associating the suspension condition with the network management intent, an intent expectation, or an expectation target is similar to that described above for the trigger condition. For details, refer to the related descriptions of S310. Details are not described herein again.

The producer entity suspends the actions in response to determining that the suspension condition is satisfied. In this case, the actions enter a suspended state, and the network management intent is in a deactivated state. The deactivated state of the intent indicates that the producer network element retains context information of the intent, and suspends maintaining the intent expectation or satisfying an expectation target of the intent. For example, when the intent is in the deactivated state, even if the expectation target of the intent is not satisfied, the producer network element does not determine management actions based on the expectation target of the intent. For example, when an energy saving intent is changed from an active state to a deactivated state, the producer network element may not need to maintain an expectation target that is of the intent and that is of reducing average energy consumption by 30%, and the producer network element may indicate the managed entity to turn on the power amplifier of the radio frequency module, or may keep a configuration existing before the deactivated state unchanged (do not deliver an additional instruction based on the intent).

S330: The producer entity executes the actions in response to determining that the trigger condition is satisfied.

The producer entity may start to execute the actions or resume the execution of the actions (for example, the actions are previously in the suspended state) in response to determining that the trigger condition is satisfied. The producer entity may activate the network management intent by configuring the managed entity, and set an intent status of the network management intent to the active state. For example, the producer entity may determine the management actions used for achieving the intent expectation or the expectation target of the network management intent, and send the management actions to the managed entity. The managed entity executes the management actions to satisfy the intent expectation or the expectation target.

A manner in which the producer entity executes the actions may be related to the trigger condition. For example, if the trigger condition is associated with the network management intent, the producer entity selects management actions that can satisfy all targets in all expectations. If the trigger condition is associated with an intent expectation in the network management intent, the producer entity may select management actions that can satisfy all targets in the intent expectation. If the activation trigger condition is associated with an expectation target in an intent expectation in the network management intent, the producer entity may select management actions that can satisfy the expectation target.

Optionally, in S340, the producer entity sends first report information to the consumer entity.

Correspondingly, the consumer entity receives the first report information from the producer entity.

The producer entity may send a first intent report to the consumer entity each time after executing the actions in response to the trigger condition. The first intent report indicates that the network management intent enters the active state, or indicates that the actions used for implementing the at least one target enter the executed state (or a running state). For example, the first intent report may include indication information, and the indication information indicates that the network management intent enters the active state, or indicates that the actions used for implementing the at least one target enter the executed state (or the running state).

Optionally, the first intent report further includes an identifier of a trigger condition determined as being satisfied. For example, if at least one trigger condition is configured for the network management intent, the producer entity may report, to the consumer entity, that currently executed actions are executed in response to which satisfied trigger condition. In this way, the consumer entity can learn of a current running state of the network management intent.

Optionally, in S350, the producer entity suspends the execution of the actions in response to determining that the suspension condition is satisfied.

The producer entity may suspend the execution of the actions in response to determining that the suspension condition is satisfied. The actions enter the suspended state, and the network management intent is in the deactivated state. The producer entity may retain the context information of the network management intent, suspend the execution of the actions, and suspend maintaining the intent expectation or satisfying the expectation target of the intent. For a manner in which the producer entity suspends the execution of the actions, refer to the descriptions related to the deactivated state of step S320. Details are not described herein again.

Optionally, in S360, the producer entity sends second report information to the consumer entity.

Correspondingly, the consumer entity receives the second report information from the producer entity.

The producer entity may send a second intent report to the consumer entity each time after suspending the execution of the actions. The second intent report indicates that the network management intent is in the deactivated state, or indicates that the actions used for implementing the at least one target enter a state in which the execution of the actions is suspended. For example, the second report information may include indication information, and the indication information indicates that the network management intent is in the deactivated state, or indicates that the actions used for implementing the at least one target enter the state in which the execution of the actions is suspended.

Optionally, the second report information further includes an identifier of a suspension condition determined as being satisfied. For example, if the network management intent includes at least one suspension condition, the producer entity may report, to the consumer entity, that current actions are suspended in response to which suspension condition. In addition, the second report information may further include a trigger condition identifier, and the trigger condition identifier indicates that a previous execution state of the actions is executed based on which satisfied trigger condition. In other words, the second report information may include a group of the trigger condition identifier and the suspension condition identifier.

Optionally, after the producer network element suspends the execution of the actions, the producer entity resumes the execution of the actions in response to determining that the trigger condition is satisfied. It may be understood that, after suspending execution of an action, the producer entity may continue to detect whether the trigger condition is satisfied. In other words, the producer entity may return to step S330 to continue the execution, and the producer entity may execute and resume the actions for a plurality of times within continuous duration of the network management intent.

Based on this technical solution, the producer entity can start to execute the actions in response to determining that the trigger condition is satisfied. In a scenario with frequent requirements on the network management intent, the producer entity can start to execute or resume the execution of the actions for a plurality of times based on the trigger condition, instead of relying on the consumer entity to send the network management intent creation request to the producer entity for a plurality of times to implement the execution of the actions for a plurality of times, so that the consumption of the transmission resources can be reduced.

The foregoing describes the manner of executing the actions in response to the trigger condition in this embodiment of this application. For ease of understanding this embodiment of this application, the following uses an example in which the consumer entity sends the intent creation request message that carries the trigger condition for description.

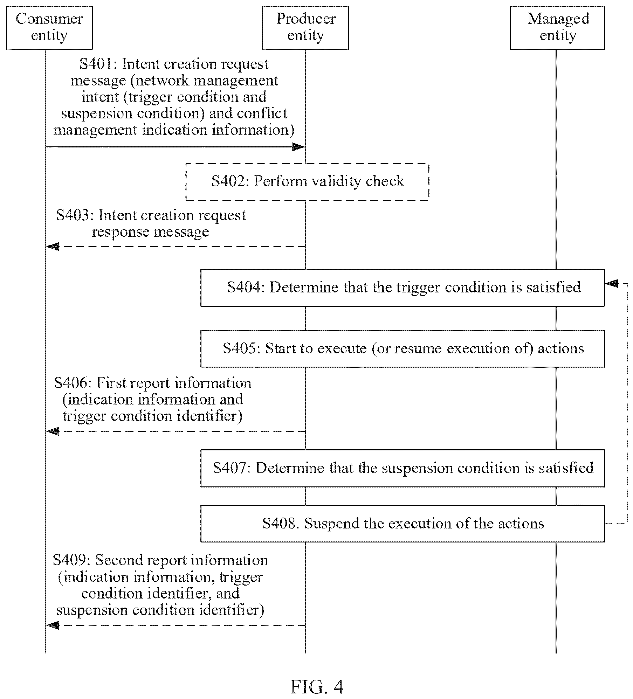

FIG. 4 is a schematic flowchart of a method for managing a network management intent according to an embodiment of this application.

S401: A consumer entity sends an intent creation request message to a producer entity. Correspondingly, the producer entity receives the intent creation request message from the consumer entity.

The intent creation request message may be used for requesting the producer entity to create the network management intent. For example, the intent creation request message may include an intent IOC of the network management intent, and the intent IOC may include a trigger condition. The IOC may further include a suspension condition.

For descriptions of the trigger condition and the suspension condition, refer to the related descriptions of FIG. 2. Details are not described herein again.

Optionally, the intent creation request message may further include conflict management indication information, and the conflict management indication information indicates not to perform, when the network management intent conflicts with another currently executed network management intent, a network management action used for implementing at least one target of the network management intent. That the network management intent conflicts with another currently executed network management intent means that an expectation target of the intent of the network management intent and an expectation target of the intent of the another currently executed network management intent cannot be satisfied at the same time. For ease of understanding this embodiment of this application, the following describes several possible cases of conflicts between the network management intent and the another currently executed network management intent by using examples.

In a first possible case, an intent expectation or target associated with the activation trigger condition semantically conflicts with the another currently executed network management intent. For example, a trigger condition of a network management intent of an energy saving type is that physical resource block utilization is less than or equal to 20%. However, an expectation target of the intent of a network management intent that is currently executed by the producer entity to ensure user experience is that physical resource block utilization is greater than 40%. In this case, the producer entity may semantically determine that the network management intent conflicts with the another network management intent, and when determining that the trigger condition is satisfied, the producer entity may determine, based on conflict indication information, not to execute actions, and may send information indicating that a conflict exists to the consumer entity.

In a second possible case, actions that the producer entity starts to execute or whose execution is resumed by the producer entity based on the trigger condition conflict with management actions for the another currently executed network management intent. For example, the producer entity determines that the trigger condition is satisfied, and determines, based on a target associated with the trigger condition, management actions used for implementing the target, for example, disabling a power amplifier of a radio frequency module. However, the management actions for the another currently executed network management intent are turning on the power amplifier of the radio frequency module. In this case, the producer entity may determine, based on the conflict management indication information, to step out of a process of executing the management actions, and send information indicating that a conflict exists to the consumer entity.

It may be understood that the foregoing is merely an example for describing the possible conflict cases. This is not particularly limited in this application. It may be further understood that the conflict management indication information may be a separate information element sent by the consumer entity to the producer entity, or may be included in the intent IOC. This is not particularly limited in this application.

Optionally, in S402, the producer entity performs validity check based on the intent creation request message.

The producer entity may check, based on a network management intent template, whether the intent creation request message complies with predefined syntax and semantics. For example, the consumer entity and the producer entity may specify description information of the trigger condition and the suspension condition. For example, a template specifying how to express the trigger condition and the suspension condition is added to the intent template. If the producer entity determines that the intent creation request message does not comply with a specification of the template, the producer entity may notify the consumer entity that the intent creation request message is invalid, so that the consumer entity further sends a valid intent creation request message. If the producer entity determines that the intent creation request message is valid, the producer entity may perform a subsequent action.

Optionally, in S403, the consumer entity sends an intent creation request response message to the producer entity. Correspondingly, the producer entity receives the intent creation request response message from the consumer entity.

The intent creation request response message may indicate whether the network management intent is successfully created. For example, the intent creation request response message may include an intent identifier of the network management intent, and the intent identifier may be used for marking the network management intent. The intent creation request response message may further include information indicating whether the intent is successfully created. For example, if the producer entity determines, in step S402, that the intent creation request message is valid, the information indicates that the intent is successfully created. If the producer entity determines that the intent creation request message is invalid, the information indicates that the intent fails to be created. In this case, the intent creation request response message may further include a reason why the creation fails. For example, which piece of information in the intent creation request response message does not satisfy an expression specified in the template. Optionally, the intent creation request response message may further include a template with a recommended expression, so that the consumer entity may further send the valid intent creation request message based on the template with the recommendation expression.

S404: The producer entity determines that the trigger condition is satisfied.

When determining that an event indicated by the trigger condition occurs or a periodicity arrives, the producer entity determines that the activation trigger condition is satisfied. For example, if the activation trigger condition is related to a performance metric of a managed entity, the producer entity may obtain a performance metric value from the managed entity. For example, the producer entity may send a metric data subscription request message to the managed entity before step S405, and the data subscription request message may be used for subscribing to a performance metric value used for determining that the activation trigger condition is satisfied. Therefore, the managed entity may return the performance metric value to the producer entity based on the data subscription request message, and the producer entity may determine, based on the performance metric value, that the activation trigger condition is satisfied, and perform the following operation S405.

S405: The producer entity executes the actions.

The producer entity may configure the managed entity to start to execute or resume the execution of the actions, so that the actions enter an executed state, and an intent state of the network management intent enters an active state. For example, the producer entity may determine the management actions used for achieving the intent expectation or the expectation target of the network management intent, and send the management actions to the managed entity. The managed entity executes the management actions to satisfy the intent expectation or the expectation target.

For more detailed descriptions of how the producer entity executes the actions, refer to the descriptions of step S330 in FIG. 3. Details are not described herein again.

Optionally, in S406, the producer entity sends first report information to the consumer entity. Correspondingly, the consumer entity receives the first report information from the consumer entity.

For content related to the first report information, refer to the descriptions of step S340. Details are not described herein again.

S407: The producer entity determines that the suspension condition is satisfied.

For content related to the producer entity determining that the suspension condition is satisfied, refer to the descriptions of step S350. Details are not described herein again.

S408: The producer entity suspends the execution of the actions.

The producer entity may retain context information of the network management intent, and suspend maintaining the intent expectation or satisfying the expectation target of the intent. In this case, the actions are in a suspended state, and the network management intent enters a deactivated state. For a manner in which the producer entity suspends the execution of the actions, refer to related descriptions of step S350. Details are not described herein again.

Optionally, in S409, the producer entity sends second report information to the consumer entity. Correspondingly, the consumer entity receives the second report information from the producer entity.

For content related to the second report information, refer to the descriptions of step S360. Details are not described herein again.

It may be understood that, after suspending execution of the management actions, the producer entity may continue to detect whether the trigger condition is satisfied. In other words, the producer entity may return to step S404 to continue execution, and the producer entity may execute and suspend the execution of the network management intent for a plurality of times within continuous duration of the network management intent.

Based on this technical solution, the producer entity can start to execute the actions in response to determining that the trigger condition is satisfied, instead of relying on signaling between the consumer entity and the producer entity to trigger the execution of the actions. Especially in a scenario with frequent requirements on the network management intent, consumption of transmission resources can be reduced.

It may be further understood that in the foregoing method embodiments, the methods and operations implemented by the producer entity may alternatively be implemented by a component (for example, a chip or a circuit) of the producer entity. In addition, the methods and operations implemented by the consumer entity may alternatively be implemented by a component (for example, a chip or a circuit) of the consumer entity. This is not limited.

In correspondence to the method provided in the foregoing method embodiments, an embodiment of this application further provides a corresponding apparatus. The apparatus includes a corresponding module configured to perform the foregoing method embodiments. The module may be software, hardware, or a combination of software and hardware. It may be understood that the technical features described in the method embodiments are also applicable to the following apparatus embodiments.

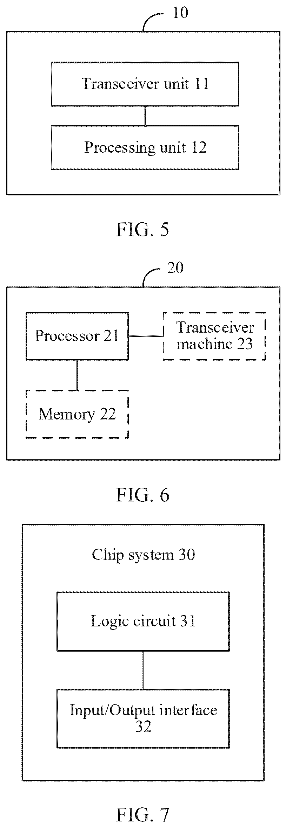

Refer to FIG. 5. For example, FIG. 5 is a diagram of a communication apparatus 10 according to an embodiment of this application. The apparatus 10 includes a transceiver unit 11 and a processing unit 12. The transceiver unit 11 may be configured to implement a corresponding communication function. The transceiver unit 11 may also be referred to as a communication interface or a communication unit. The processing unit 12 may be configured to perform data or information processing.

Optionally, the apparatus 10 further includes a storage unit. The storage unit may be configured to store instructions and/or data. The processing unit 12 may read the instructions and/or the data in the storage unit, so that the apparatus implements the foregoing method embodiments.

In a possible design, the apparatus 10 may be configured to perform an action performed by the producer entity in the foregoing method embodiments. In this case, the apparatus 10 may be a producer entity or a component of the producer entity. The transceiver unit 11 is configured to perform a receiving and sending-related operation on a producer entity side in the foregoing method embodiments. The processing unit 12 is configured to perform a processing-related operation on the producer entity side in the foregoing method embodiments.

In a first possible implementation, the transceiver unit 11 is configured to receive a trigger condition associated with a network management intent, where the trigger condition is a condition for triggering execution of actions, and the actions include at least one network management action used for implementing at least one target in the network management intent; and the transceiver unit 11 is configured to start to execute the actions in response to determining that the trigger condition is satisfied.

The apparatus 10 may implement corresponding steps or procedures performed by the producer entity in the method embodiments according to embodiments of this application. The apparatus 10 may include units configured to perform the methods performed by the producer entity in the method embodiments according to embodiments of this application. A specific process in which the units perform the foregoing corresponding steps is described in detail in the foregoing method embodiments. For brevity, details are not described herein again.

In another possible design, the apparatus 10 may be configured to perform an action performed by the consumer entity in the foregoing method embodiments. In this case, the apparatus 10 may be a consumer entity or a component of the consumer entity. The transceiver unit 11 is configured to perform a receiving and sending-related operation on a consumer entity side in the foregoing method embodiments. The processing unit 12 is configured to perform a processing-related operation on the consumer entity side in the foregoing method embodiments.

In a first possible implementation, the processing unit 12 is configured to generate a trigger condition associated with a network management intent, where the trigger condition is a condition for triggering execution of actions, and the actions include at least one network management action used for implementing at least one target in the network management intent; and the transceiver unit 11 is configured to send the trigger condition.

The apparatus 10 may implement corresponding steps or procedures performed by the consumer entity in the method embodiments according to embodiments of this application. The apparatus 10 may include units configured to perform the methods performed by the consumer entity in the method embodiments according to embodiments of this application. A specific process in which the units perform the foregoing corresponding steps is described in detail in the foregoing method embodiments. For brevity, details are not described herein again.

It may be understood that the apparatus 10 herein is embodied in a form of a functional unit. The term "unit" herein may be an application-specific integrated circuit (application-specific integrated circuit, ASIC), an electronic circuit, a processor (for example, a shared processor, a dedicated processor, or a group processor) configured to execute at least one software or firmware program and a memory, a combined logic circuit, and/or another suitable component that supports the described functions. In an optional example, a person skilled in the art may understand that the apparatus 10 may be specifically the producer entity in the foregoing embodiments, and may be configured to perform procedures and/or steps corresponding to the producer entity in the foregoing method embodiments; or the apparatus 10 may be specifically the consumer entity in the foregoing embodiments, and may be configured to perform procedures and/or steps corresponding to the consumer entity in the foregoing method embodiments. To avoid repetition, details are not described herein again.

The apparatus 10 in the foregoing solutions has a function of implementing corresponding steps performed by the communication device (for example, the producer entity or the consumer entity) in the foregoing methods. The function may be implemented by hardware, or may be implemented by executing corresponding software by hardware. The hardware or the software includes at least one module corresponding to the foregoing function. For example, the transceiver unit may be replaced with a transceiver (for example, a sending unit in the transceiver unit may be replaced with a transmitter, and a receiving unit in the transceiver unit may be replaced with a receiver), and another unit like the processing unit may be replaced with a processor, respectively performing receiving and sending operations and a related processing operation in each method embodiment.

In addition, the transceiver unit 11 may alternatively be a transceiver circuit (for example, the transceiver circuit may include a receiver circuit and a transmitter circuit), and the processing unit may be a processing circuit.

It should be noted that the apparatus in FIG. 5 may be the device in the foregoing embodiments, or may be a chip or a chip system, for example, a system-on-a-chip (system-on-a-chip, SoC). The transceiver unit may be an input/output circuit or a communication interface. The processing unit is a processor, a microprocessor, or an integrated circuit integrated on the chip. This is not limited herein.

Refer to FIG. 6. For example, FIG. 6 is a diagram of another communication apparatus 20 according to an embodiment of this application. The apparatus 20 includes a processor 21, and the processor 21 is coupled to a memory 22. Optionally, the apparatus 20 further includes the memory 22. The memory 22 is configured to store a computer program or instructions and/or data. The processor 21 is configured to execute the computer program or the instructions stored in the memory 22, or read the data stored in the memory 22, to perform the methods in the foregoing method embodiments.

Optionally, there is at least one processor 21.

Optionally, there is at least one memory 22.

Optionally, the memory 22 and the processor 21 are integrated together or separately disposed.

Optionally, as shown in FIG. 6, the apparatus 20 further includes a transceiver machine 23, and the transceiver machine 23 is configured to receive and/or send a signal. For example, the processor 21 is configured to control the transceiver machine 23 to receive and/or send the signal.

In a solution, the apparatus 20 is configured to implement operations performed by the producer entity in the foregoing method embodiments.

For example, the processor 21 is configured to execute the computer program or the instructions stored in the memory 22, to implement related operations of the producer entity in the foregoing method embodiments, for example, the method performed by the producer entity in the embodiment shown in FIG. 3.

In another solution, the apparatus 20 is configured to implement operations performed by the consumer entity in the foregoing method embodiments.

For example, the processor 21 is configured to execute the computer program or the instructions stored in the memory 22, to implement related operations of the consumer entity in the foregoing method embodiments, for example, the method performed by the consumer entity in the embodiment shown in FIG. 3.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

It may be further understood that the memory in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example but not limitation, the RAM includes the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

When the processor is a general-purpose processor, a DSP, an ASIC, an FPGA or another programmable logic device, a discrete gate or a transistor logic device, or a discrete hardware component, the memory (storage module) may be integrated into the processor.

The memory described in this specification aims to include but is not limited to these memories and any memory of another proper type.

Refer to FIG. 7. For example, FIG. 7 is a diagram of a chip system 30 according to an embodiment of this application. The chip system 30 (or may be referred to as a processing system) includes a logic circuit 31 and an input/output interface (input/output interface) 32.

The logic circuit 31 may be a processing circuit in the chip system 30. The logic circuit 31 may be coupled to a storage unit, and invoke instructions in the storage unit, so that the chip system 30 can implement the methods and functions in embodiments of this application. The input/output interface 32 may be an input/output circuit in the chip system 30, and outputs information processed by the chip system 30, or inputs to-be-processed data or signaling information to the chip system 30 for processing.

Specifically, for example, if the chip system 30 is installed in a producer entity, the logic circuit 31 is coupled to the input/output interface 32, and the input/output interface 32 may input a wake-up signal to the logic circuit 31 for processing.

In a solution, the chip system 30 is configured to implement operations performed by the producer entity in the foregoing method embodiments.

For example, the logic circuit 31 is configured to implement a processing-related operation performed by the producer entity in the foregoing method embodiments, for example, a processing-related operation performed by the producer entity in the embodiment shown in FIG. 3. The input/output interface 32 is configured to implement a sending and/or receiving-related operation performed by the producer entity in the foregoing method embodiments, for example, a sending and/or receiving-related operation performed by the producer entity in the embodiment shown in FIG. 3.

In another solution, the chip system 30 is configured to implement operations performed by the consumer entity in the foregoing method embodiments.

For example, the logic circuit 31 is configured to implement a processing-related operation performed by the consumer entity in the foregoing method embodiments, for example, a processing-related operation performed by the consumer entity in the embodiment shown in FIG. 3. The input/output interface 32 is configured to implement a sending and/or receiving-related operation performed by the consumer entity in the foregoing method embodiments, for example, a sending and/or receiving-related operation performed by the consumer entity in the embodiment shown in FIG. 3.

An embodiment of this application further provides a computer-readable storage medium. The computer-readable storage medium stores computer instructions for implementing the methods performed by a device in the foregoing method embodiments.

For example, when a computer program is executed by a computer, the computer is enabled to implement the method performed by the producer entity in the foregoing method embodiments.

For another example, when the computer program is executed by a computer, the computer is enabled to implement the method performed by the consumer entity in the foregoing method embodiments.

An embodiment of this application further provides a computer program product, including instructions. When the instructions are executed by a computer, the method performed by the producer entity or the consumer entity in the foregoing method embodiments is implemented.

An embodiment of this application further provides a communication system. The communication system includes the producer entity and the consumer entity in the foregoing embodiments.

For explanations and beneficial effect of related content in any one of the apparatuses provided above, refer to the corresponding method embodiment provided above. Details are not described herein again.

In several embodiments provided in this application, it should be understood that the disclosed apparatus and method may be implemented in other manners. For example, the described apparatus embodiment is merely an example. For example, division into the units is merely logical function division and may be other division in actual implementation. For example, at least two units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

All or some of the foregoing embodiments may be implemented by using software, hardware, firmware, or any combination thereof. When software is used to implement embodiments, all or some of embodiments may be implemented in a form of a computer program product. The computer program product includes at least one computer instruction. When the computer program instructions are loaded and executed on the computer, the procedure or functions according to embodiments of this application are all or partially generated. The computer may be a general-purpose computer, a dedicated computer, a computer network, or other programmable apparatuses. For example, the computer may be a personal computer, a server, a network equipment, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating at least one usable medium. The usable medium may be a magnetic medium (for example, a floppy disk, a hard disk, or a magnetic tape), an optical medium (for example, a DVD), a semiconductor medium (for example, a solid-state drive (solid-state drive, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for managing a network management intent, wherein the method comprises:
receiving a trigger condition associated with the network management intent, wherein the trigger condition is a condition for triggering execution of actions, and the actions comprise at least one network management action used for implementing at least one target in the network management intent; and
starting to execute the actions in response to determining that the trigger condition is satisfied.

2. The method according to claim 1, wherein the trigger condition is a constraint condition that is of a performance metric and that is related to a managed entity of the network management intent.

3. The method according to claim 1 or 2, wherein receiving the trigger condition associated with the network management intent comprises:
receiving a first request message, wherein the first request message is used for requesting to create the network management intent, and the first request message comprises the network management intent and the trigger condition; or the first request message comprises the network management intent, and the network management intent comprises the trigger condition; or
receiving a second request message, wherein the second request message is used for requesting to modify the network management intent, and the intent modification request message, namely, the second request message comprises an identifier of the network management intent and the trigger condition.

4. The method according to any one of claims 1 to 3, wherein the method further comprises:
receiving a suspension condition associated with the network management intent, wherein the suspension condition is a condition for suspending the actions; and
suspending the execution of the actions in response to determining that the suspension condition is satisfied.

5. The method according to claim 4, wherein the suspension condition is a constraint condition that is of a performance metric and that is related to the managed entity of the network management intent.

6. The method according to claim 4 or 5, wherein receiving the suspension condition associated with the network management intent comprises:
receiving a third request message, wherein the third request message is used for requesting to create the network management intent, and the third request message comprises the network management intent and the suspension condition; or
receiving a fourth request message, wherein the fourth request message is used for requesting to modify the network management intent, and the fourth request message comprises the identifier of the network management intent and the suspension condition.

7. The method according to any one of claims 4 to 6, wherein after suspending the execution of the actions, the method further comprises:
resuming the execution of the actions in response to determining that the trigger condition is satisfied.

8. The method according to any one of claims 1 to 7, wherein after starting to execute the actions in response to determining that the trigger condition is satisfied, the method further comprises:
sending first report information, wherein the first report information indicates that the actions enter an executed state.

9. The method according to any one of claims 4 to 8, wherein after suspending the execution of the actions in response to determining that the suspension condition is satisfied, the method further comprises:
sending second report information, wherein the second report information indicates that the actions enter a suspended state.

10. The method according to any one of claims 1 to 9, wherein
the at least one target is all targets in all expectations in the network management intent;
the at least one target is all targets in one expectation in the network management intent; or
the at least one target is one target in one expectation in the network management intent.

11. A method for managing a network management intent, wherein the method comprises:
generating a trigger condition associated with the network management intent, wherein the trigger condition is a condition for triggering execution of actions, and the actions comprise at least one network management action used for implementing at least one target in the network management intent; and
sending the trigger condition.

12. The method according to claim 11, wherein the trigger condition is a constraint condition that is of a performance metric and that is related to a managed entity of the network management intent.

13. The method according to claim 11 or 12, wherein sending the trigger condition comprises:
sending a first request message, wherein the first request message is used for requesting to create the network management intent, and the first request message comprises the network management intent and the trigger condition; or the first request message comprises the network management intent, and the network management intent comprises the trigger condition; or
sending a second request message, wherein the second request message is used for requesting to modify the network management intent, and the second request message comprises an identifier of the network management intent and the trigger condition.

14. The method according to any one of claims 11 to 13, wherein the method further comprises:
sending a suspension condition associated with the network management intent, wherein the suspension condition is a condition for suspending the actions.

15. The method according to claim 14, wherein the suspension condition is a constraint condition that is of a performance metric and that is related to the managed entity of the network management intent.

16. The method according to claim 14 or 15, wherein sending the suspension condition associated with the network management intent comprises:
sending a third request message, wherein the third request message is used for requesting to create the network management intent, and the third request message comprises the network management intent and the suspension condition; or
sending a fourth request message, wherein the fourth request message is used for requesting to modify the network management intent, and the third request message comprises the identifier of the network management intent and the suspension condition.

17. The method according to any one of claims 11 to 16, wherein the method further comprises:
receiving first report information, wherein the first report information indicates that the actions enter an executed state.

18. The method according to any one of claims 14 to 17, wherein the method further comprises:
receiving second report information, wherein the second report information indicates that the actions enter a suspended state.

19. The method according to any one of claims 11 to 18, wherein
the at least one target is all targets in all expectations in the network management intent;
the at least one target is all targets in one expectation in the network management intent; or
the at least one target is one target in one expectation in the network management intent.

20. A method for managing a network management intent, wherein the method comprises:
sending a trigger condition associated with the network management intent, and receiving the trigger condition associated with the network management intent, wherein the trigger condition is a condition for triggering execution of actions, and the actions comprise at least one network management action used for implementing at least one target in the network management intent; and
starting to execute the actions in response to determining that the trigger condition is satisfied.

21. The method according to claim 20, wherein the trigger condition is a constraint condition that is of a performance metric and that is related to a managed entity of the network management intent.

22. An apparatus for managing a network management intent, wherein the apparatus comprises a transceiver unit and a processing unit, wherein
the transceiver unit is configured to receive a trigger condition associated with the network management intent, wherein the trigger condition is a condition for triggering execution of actions, and the actions comprise at least one network management action used for implementing at least one target in the network management intent; and
the processing unit is configured to start to execute the actions in response to determining that the trigger condition is satisfied.

23. The apparatus according to claim 22, wherein the trigger condition is a constraint condition that is of a performance metric and that is related to a managed entity of the network management intent.

24. An apparatus for managing a network management intent, wherein the apparatus comprises a transceiver unit and a processing unit, wherein
the processing unit is configured to generate a trigger condition associated with the network management intent, wherein the trigger condition is a condition for triggering execution of actions, and the actions comprise at least one network management action used for implementing at least one target in the network management intent; and
the transceiver unit is configured to send the trigger condition.

25. The management apparatus according to claim 24, wherein the trigger condition is a constraint condition that is of a performance metric and that is related to a managed entity of the network management intent.

26. A communication apparatus, comprising a unit configured to perform the method according to any one of claims 1 to 10, or comprising a unit configured to perform the method according to any one of claims 11 to 19.

27. A communication system, comprising an apparatus configured to perform the method according to any one of claims 1 to 10 and an apparatus configured to perform the method according to any one of claims 11 to 19.

28. The system according to claim 27, further comprising a managed entity of a network management intent.

29. A computer-readable storage medium, wherein the computer-readable storage medium stores a computer program, and when the computer program is run on a computer, the computer is enabled to perform the method according to any one of claims 1 to 10, or the computer is enabled to perform the method according to any one of claims 11 to 19.

30. A computer program product, comprising computer program code, wherein when the computer program code is run on a computer, the computer is enabled to implement the method according to any one of claims 1 to 10, or the computer is enabled to implement the method according to any one of claims 11 to 19.

31. A communication apparatus, comprising a processor, configured to execute a computer program stored in a memory, to enable the apparatus to perform the method according to any one of claims 1 to 10; or configured to execute a computer program stored in a memory, to enable the apparatus to perform the method according to any one of claims 11 to 19.

32. The apparatus according to claim 31, wherein the apparatus further comprises the memory.
